(19) Europäisches Patentamt
European Patent Office
Office européen des brevets

(11) **EP 1 980 015 B1**

(12) **EUROPÄISCHE PATENTSCHRIFT**

(45) Veröffentlichungstag und Bekanntmachung des Hinweises auf die Patenterteilung:
**04.05.2011  Patentblatt 2011/18**

(21) Anmeldenummer: **07712062.4**

(22) Anmeldetag: **19.01.2007**

(51) Int Cl.:
*H02P 3/18* (2006.01)          *H02H 7/08* (2006.01)

(86) Internationale Anmeldenummer:
**PCT/EP2007/050525**

(87) Internationale Veröffentlichungsnummer:
**WO 2007/085566 (02.08.2007 Gazette 2007/31)**

(54) **VERFAHREN ZUM ABSCHALTEN EINER ELEKTRISCHEN MASCHINE IM FALLE EINER STÖRUNG**

PROCESS FOR SWITCHING OFF AN ELECTRICAL MACHINE IN THE EVENT OF A MALFUNCTION

PROCÉDÉ POUR COUPER UNE MACHINE ÉLECTRIQUE EN CAS DE DÉFAILLANCE

(84) Benannte Vertragsstaaten:
**DE FR GB IT**

(30) Priorität: **24.01.2006  DE 102006003254**

(43) Veröffentlichungstag der Anmeldung:
**15.10.2008  Patentblatt 2008/42**

(73) Patentinhaber: **Robert Bosch GmbH**
**70442 Stuttgart (DE)**

(72) Erfinder:
• **KUEHNER, Jochen**
**71522 Backnang (DE)**
• **STAHL, Manfred**
**70439 Stuttgart (DE)**
• **TRUNK, Martin**
**71696 Moeglingen (DE)**
• **ACKERMANN, Manfred**
**71570 Oppenweiler (DE)**
• **RECHBERGER, Klaus**
**71638 Ludwigsburg (DE)**

(56) Entgegenhaltungen:
**EP-A- 0 933 858          EP-A1- 1 536 552**
**DE-A1- 10 205 963        US-A- 5 877 601**

**Beschreibung**

Die Erfindung betrifft ein Verfahren zum Abschalten einer elektrischen Maschine mit Pulswechselrichter im Falle einer Störung gemäß dem Oberbegriff des Patentanspruchs 1, sowie eine entsprechende Vorrichtung gemäß dem Oberbegriff des Patentanspruchs 8.

Elektrische Maschinen mit Pulswechselrichter werden z. B. in Hybridfahrzeugen eingesetzt, wo sie wahlweise im Motor- oder Generatorbetrieb betrieben werden. Im Motorbetrieb erzeugt die elektrische Maschine ein zusätzliches Antriebsmoment, das den Verbrennungsmotor z.B. in einer Beschleunigungsphase unterstützt, im Generatorbetrieb erzeugt sie elektrische Energie, die in einem Energiespeicher, wie z.B. einer Batterie oder einem Super-Cap gespeichert wird. Betriebsart und Leistung der elektrischen Maschine werden mittels des Pulswechselrichters eingestellt.

Bekannte Pulswechselrichter (PWR) umfassen eine Reihe von Schaltern, mit denen die einzelnen Phasen (U,V,W) der elektrischen Maschine wahlweise gegen ein hohes Potential, die.so genannte Zwischenkreisspannung, oder gegen ein niedriges Bezugspotential, insbesondere Masse geschaltet werden. Die Schalter werden von einem externen Steuergerät angesteuert, das in Abhängigkeit vom Fahrerwunsch (Beschleunigen bzw. Bremsen) einen Soll-Betriebspunkt für die elektrische Maschine berechnet. Der Pulswechselrichter ist mit dem Steuergerät verbunden und erhält von diesem die entsprechenden Betriebsdaten bzw. Steuerbefehle.

Im Falle einer Störung, die z.B. durch einen zu hohen Batteriestrom oder einen zu hohen Zuleitungsstrom entstehen kann, wird der Pulswechselrichter in einen sicheren Zustand geschaltet, um eine mögliche Schädigung elektrischer Komponenten zu verhindern. Aus dem Stand der Technik sind im Wesentlichen zwei verschiedene Abschaltverfahren bekannt, die alternativ angewendet werden: bei einem ersten Verfahren werden sämtliche mit dem niedrigen Potential verbundenen Schalter (Low-Side-Schalter) geschlossen und alle mit dem hohen Potential verbundenen Schalter (High-Side-Schalter) geöffnet. Diese Betriebsart wird auch als Kurzschluss-Modus bezeichnet. Bei einem anderen Abschaltverfahren werden sämtliche Schalter des Pulswechselrichters geöffnet.
Dies wird auch als Freischalt-Modus bezeichnet.

Die bekannten Abschaltverfahren eignen sich prinzipiell zum Schutz des Energiespeichers bzw. daran angeschlossener elektrischer Bauteile, haben jedoch einige Nachteile. So kann beispielsweise der Phasenstrom nach dem Umschalten in den Kurzschluss-Modus noch kurze Zeit (1-1,5 Halbwellen) ansteigen. Die Auslöseschwelle für den Kurzschluss-Modus muss daher entsprechend niedrig eingestellt werden. Darüber hinaus bewirkt das Umschalten in den Kurzschluss-Modus eine sprungartige Veränderung des Maschinenmoments, die sich störend auf das Fahrzeug-Verhalten auswirken kann. Im Kurzschluss-Modus wird außerdem eine erhebliche elektrische Verlustleistung in der elektrischen Maschine erzeugt, die zu einer Überhitzung führen kann. Der Freischalt-Modus hat dagegen insbesondere den Nachteil, dass die Zwischenkreisspannung nach dem Umschalten in den Freischalt-Modus noch um 50V und mehr ansteigen kann. Dadurch können der Energiespeicher und andere elektrische Bauteile überladen bzw. geschädigt werden.

Es ist daher die Aufgabe der vorliegenden Erfindung, ein Verfahren zum Abschalten einer elektrischen Maschine zu schaffen, das geringere Nebeneffekte in Bezug auf einen nachträglichen Strom- oder Spannungsanstieg aufweist und einen geringeren Einfluss auf das Maschinen-Moment und eine geringere Erwärmung der elektrischen Maschine bewirkt. Dabei sollte das Verfahren möglichst einfach und kostengünstig realisierbar sein.

Gelöst wird diese Aufgabe gemäß der Erfindung durch die im Patentanspruch 1 sowie im Anspruch 8 angegebenen Merkmale. Weitere Ausgestaltungen der Erfindung sind Gegenstand von Unteransprüchen.

Ein wesentlicher Aspekt der Erfindung besteht darin, beide bekannte Abschalt-Betriebsarten sequentiell zu nutzen und die elektrische Maschine zunächst in den Freischalt-Modus und anschließend in den Kurzschluss-Modus zu schalten. Wenn der Freischalt-Modus ausreichend kurz ist und relativ schnell in den Kurzschluss-Modus umgeschaltet wird, können die mit dem Freischalt-Modus verbundenen negativen Effekte begrenzt werden. Darüber hinaus treten die mit dem Kurzschluss-Modus verbundenen Effekte nur noch in einem wesentlich geringeren Maße auf. Die sequentielle Verkettung von Freischalt-Modus und Kurzschluss-Modus hat somit den wesentlichen Vorteil, dass die vorstehend genannten Nachteile wesentlich reduziert oder vollständig eliminiert werden können.

Das Umschalten vom Freischalt- in den Kurzschluss-Modus erfolgt vorzugsweise nach einer vorgegebenen Zeitschwelle. Diese ist vorzugsweise an die jeweilige Applikation anzupassen und kann beispielsweise 10 ms betragen. Die Vorgabe einer Zeitschwelle kann einfach und kostengünstig, z.B. mittels eines Zeitglieds, realisiert werde.

Das vorstehend genannte Zeitkriterium kann wahlweise mit einem oder mehreren zusätzlichen Kriterien, insbesondere Strom- und/oder Spannungs-Zuständen des Energiespeichers oder der elektrischen Maschine, verknüpft werden. Dadurch wird erreicht, dass der Pulswechselrichter längere Zeit im Freischalt-Modus bleibt und erst dann vom Freischalt-Modus in den Kurzschluss-Modus umgeschaltet wird, wenn kritische Strom- und/oder Spannungs-Zustände an der elektrischen Maschine oder im daran angeschlossenen elektrischen Netz erreicht werden.

Gemäß einer ersten Ausführungsform der Erfindung erfolgt der Übergang vom Freischalt-Modus in den Kurzschluss-Modus, wenn das Zeitkriterium erfüllt ist und zusätzlich ein Stromwert, wie z.B. der Batteriestrom, einen vorgegebenen Schwellenwert überschreitet. Das Umschalten in den Kurzschluss-Modus erfolgt somit nur dann, wenn der Batterie(Lade-)strom kritische Werte erreicht.

Gemäß einer zweiten Ausführungsform der Erfindung erfolgt das Umschalten in den Kurzschluss-Modus, wenn das genannte Zeitkriterium erfüllt ist und ein Spannungswert wie z.B. die Zwischenkreisspannung einen vorgegebenen Schwellenwert überschreitet. Dadurch kann insbesondere eine Schädigung spannungsempfindlicher Bauteile verhindert werden. Zur Messung der genannten Ströme oder Spannungen sind geeignete Strom- bzw. Spannungssensoren vorgesehen. Diese können im Steuergerät integriert sein.

Gemäß einer dritten Ausführungsform der Erfindung erfolgt das Umschalten in den Kurzschluss-Modus, wenn das genannte Zeitkriterium erfüllt ist und die Drehzahl der elektrischen Maschine einen vorgegebenen Schwellenwert überschreitet. Wie eingangs erwähnt wurde, ist der Freischalt-Modus vor allem bei hohen Drehzahlen kritisch, da in diesem Fall entsprechend hohe Spannungen von der elektrischen Maschine erzeugt werden, die die Batterie bzw. den Energiespeicher schädigen können. Der Schwellenwert der Drehzahl liegt vorzugsweise etwa bei 50% einer maximalen Drehzahl der elektrischen Maschine. Zur Messung der genannten Drehzahl ist vorzugsweise ein geeigneter Drehzahlsensor vorgesehen.

Die Erfindung wird nachstehend anhand der beigefügten Zeichnungen beispielhaft näher erläutert. Es zeigen:

Fig. 1 eine schematische Darstellung einer 3-phasigen elektrischen Maschine mit Pulswechselrichter;

Fig. 2 ein Zustandsdiagramm verschiedener Betriebszustände einer elektrischen Maschine bei einer Störung; und

Fig. 3 eine beispielhafte Darstellung für die Drehzahl abhängige Umschaltung in den Kurzschluss-Modus.

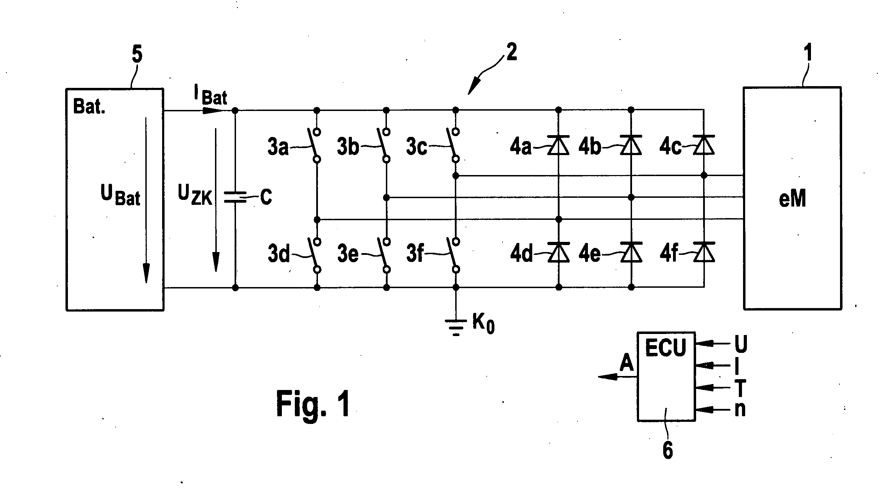

Fig. 1 zeigt eine schematische Darstellung einer elektrischen Maschine 1 mit einem daran angeschlossenen Pulswechselrichter 2. Der Pulswechselrichter (PWR) 2 umfasst mehrere Schalter 3a-3f, die mit den einzelnen Phasen U,V,W der elektrischen Maschine 1 verbunden sind und die Phasen U,V,W entweder gegen ein hohes Versorgungspotential (Batteriespannung $U_{Bat}$) oder ein niedriges Bezugspotential (Masse) schalten. Die mit dem hohen Versorgungspotential $U_{Bat}$ verbundenen Schalter 3a-3c werden dabei auch als "High-Side-Schalter" und die mit Masse verbunden Schalter 3d-3f als "Low-Side-Schalter" bezeichnet. Der Pulswechselrichter 2 umfasst ferner mehrere Freilaufdioden 4a-4f, die in Form einer sechspulsigen Gleichrichter-Brückenschaltung angeordnet sind. Dabei ist jeweils eine Diode 4a-4f parallel zu einem der Schalter 3a-3f angeordnet.

Der PWR 2 bestimmt Leistung und Betriebsart der elektrischen Maschine 1 und wird von einem Steuergerät 6 entsprechend angesteuert. Die elektrische Maschine 1 kann somit wahlweise im Motor- oder Generatorbetrieb betrieben werden. Im Motorbetrieb erzeugt sie ein zusätzliches Antriebsmoment, das den Verbrennungsmotor z.B. in einer Beschleunigungsphase unterstützt. Im Generatorbetrieb wird dagegen mechanische Energie in elektrische Energie gewandelt und in einem Energiespeicher, hier einer Batterie 5 gespeichert.

Parallel zum Pulswechselrichter 2 ist ein so genannter Zwischenkreis-Kondensator C angeordnet, der im Wesentlichen zur Stabilisierung der Batterie-Spannung $U_{Bat}$ dient.

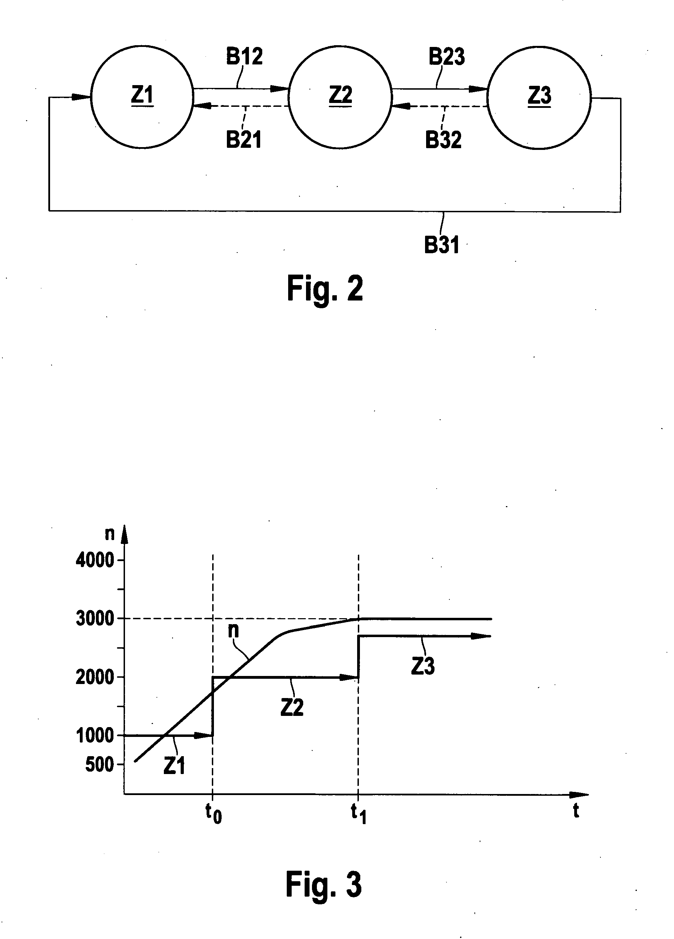

Fig. 2 zeigt ein Zustandsdiagramm verschiedener Betriebszustände beim Abschalten der elektrischen Maschine 1. Dabei bezeichnet der Zustand Z1 einen regulären (Normal-)Betrieb, der Zustand Z2 einen Freischalt-Modus und der Zustand Z3 einen Kurzschluss-Modus. Bei einer Störung des Systems, die z.B. in zu hohen Strom- oder Spannungswerten oder in einer zu hohen Temperatur begründet sein kann, schaltet der Pulswechselrichter 2 - getriggert vom Steuergerät 6 - automatisch in den Freischalt-Modus Z2, um eine Schädigung der elektrischen Maschine 1 oder spannungsempfindlicher Bauteile zu vermeiden.

Die Umschalt-Bedingung ist hier mit B12 bezeichnet und kann je nach Applikation frei gewählt werden. Im Freischalt-Modus Z2 sind sämtliche Schalter 3a-3f geöffnet. Die Umschalt-Bedingung B12 ist üblicherweise als eine Funktion einer Spannung, eines Stroms oder einer Temperatur formuliert. Zur Messung der erforderlichen Strom-, Spannungs- oder Temperaturwerte sind entsprechende Sensoren (z. B. im Steuergerät 6 integriert) vorgesehen.

Bei Eintreten einer Bedingung B23 wird die elektrische Maschine 1 bzw. der Pulswechselrichter 2 automatisch vom Freischalt-Modus (Z2) in den Kurzschluss-Modus (Z3) umgeschaltet. Für das Umschalten in den Kurzschluss-Modus (Z3) können verschiedene Bedingungen B23 formuliert werden. Die Umschaltbedingung B23 sollte derart gewählt sein, dass eine Schädigung insbesondere der Batterie 5 vermieden wird.

Eine erste Möglichkeit besteht beispielsweise darin, eine reine Zeitbedingung vorzugeben. In diesem Fall erfolgt die Umschaltung in den Kurzschluss-Modus Z3, wenn die Dauer des Freischalt-Modus Z2 eine vorgegebene Zeitschwelle, z.B. 10 ms überschritten hat. Diese Realisierung ist besonders einfach. Die Umschaltung in den Kurzschluss-Modus Z3 erfolgt vorzugsweise nach einer Dauer t, mit:

$$t = L \cdot K \cdot I_{max} / [U_{zk} + R \cdot I_{max} \cdot K]$$

Dabei ist:

t = Abklingzeit linearisiert auf den Wert Null,

L/R Induktivität/Widerstand (Wicklung Sternschaltung)

$I_{max}$ = maximaler Zuleitungsstrom vor dem Abschalten

K = Faktor (Wert 1.5 ... 2.0)

$U_{zk}$ = Zwischenkreisspannung

Eine zweite Möglichkeit besteht darin, in den Kurzschluss-Modus Z3 umzuschalten, wenn die vorstehend genannte Zeitbedingung erfüllt ist und der Batterie-Ladestrom (generatorisch) größer ist als ein vorgegebener Schwellenwert, z.B. 20 A. In diesem Fall erfolgt die Umschaltung in den Kurzschlussmodus, wenn der Batterie-Ladestrom kritische Werte erreicht hat.

Eine dritte Möglichkeit besteht darin, den Pulswechselrichter 2 in den Kurzschluss-Modus Z3 umzuschalten, wenn die vorstehend genannte Zeitbedingung erfüllt ist und die Zwischenkreisspannung $U_{zk}$ einen vorgegebenen Schwellenwert überschreitet. In diesem Fall kann somit eine Schädigung des PWR 2 verhindert werden.

Eine vierte Möglichkeit besteht darin, den Pulswechselrichter 2 in den Kurzschluss-Modus Z3 umzuschalten, wenn die Drehzahl n der elektrischen Maschine 1 einen vorgegebenen Schwellenwert überschreitet. Dieser Schwellenwert beträgt dabei vorzugsweise etwa 50% einer Maximaldrehzahl.

Das Steuergerät 6 umfasst einen Algorithmus, der die für das implementierte Verfahren notwendigen Größen (Spannung und/oder Strom und/oder Temperatur und/oder Drehzahl) einliest und verarbeitet. Das Steuergerät umfasst vorzugsweise wenigstens einen Timer, mit dem die genannte Zeitbedingung überprüft wird. Der Algorithmus arbeitet dabei wie vorstehend beschrieben. Wenn eine Störung festgestellt wird, d.h. Bedingung B12 erfüllt ist, erzeugt das Steuergerät 6 ein Steuersignal A für den PWR 2, mit dem der PWR2 zunächst in den Freischalt-Modus geschaltet wird. Bei Eintritt der Bedingung B23 erzeugt das Steuergerät 6 dann ein Steuersignal A für den PWR 2, mit dem der PWR2 in den Kurzschluss-Modus Z3 geschaltet wird.

Fig. 3 zeigt die Umschaltung vom Freischalt-Modus Z2 in den Kurzschluss-Modus Z3 in Abhängigkeit von der Drehzahl n der elektrischen Maschine 1 (bzw. einer proportionalen Drehzahl). Wie zu erkennen ist, befindet sich die elektrische Maschine 1 zunächst im regulären Betrieb mit steigender Drehzahl n. Zum Zeitpunkt t0 tritt eine Störung auf, welche die Bedingung B12 erfüllt. Der Pulswechselrichter 2 wird dann in den Freischalt-Modus Z2 geschaltet. Die Zeitschwelle von 10 ms wird kurz nach dem Zeitpunkt t0 erreicht. Die Drehzahl n der elektrischen Maschine 1 steigt danach weiter an, bis sie einen Wert von 3.000 $min^{-1}$ erreicht. Zum Zeitpunkt t1 ist die Bedingung B23 (t > 10 ms und n > 3.000 $min^{-1}$) erfüllt. Das System schaltet somit in den Kurzschluss-Modus Z3. Die Rücksprungbedingungen B21 und B31 sind hier übergeordnet, sollen aber nicht weiter behandelt werden.

## Patentansprüche

1. Verfahren zum Betreiben einer elektrischen Maschine (1) mit einem Pulswechselrichter (2) im Falle einer Störung, **dadurch gekennzeichnet, dass** die elektrische Maschine (1) im Falle einer Störung zunächst in einen Freischalt-Modus (Z2), in dem sämtliche Schalter (3a-3f) des Pulswechselrichters (2) geöffnet sind, und nachfolgend in einen Kurzschluss-Modus (Z3) geschaltet wird, in dem die mit einem hohen Potential verbundenen Schalter (3a-3c) geöffnet und die mit einem niedrigen Potential ($U_0$) verbundenen Schalter (3d-3f) geschlossen sind.

2. Verfahren nach Anspruch 1, **dadurch gekennzeichnet, dass** die elektrische Maschine (1) vom Freischalt-Modus (Z2) in den Kurzschluss-Modus (Z3) geschaltet wird, wenn eine vorgegebene Zeitschwelle überschritten wird.

3. Verfahren nach Anspruch 2, **dadurch gekennzeichnet, dass** die Zeitschwelle gemäß einer Beziehung:

$$t = L \cdot K \cdot I_{max} / [U_{zk} + R \cdot I_{max} \cdot K]$$

gewählt ist.

4. Verfahren nach einem der vorhergehenden Ansprüche, **dadurch gekennzeichnet, dass** die elektrische Maschine (1) vom Freischalt-Modus (Z2) in den Kurzschluss-Modus (Z3) geschaltet wird, wenn eine vorgegebene Zeitschwelle überschritten und ein Stromwert, insbesondere der Batteriestrom ($I_{Bat}$), einen vorgegebenen Schwellenwert überschreitet.

5. Verfahren nach einem der Ansprüche 1 bis 3, **dadurch gekennzeichnet, dass** die elektrische Maschine (1) vom Freischalt-Modus (Z2) in den Kurzschluss-Modus (Z3) geschaltet wird, wenn eine vorgegebene Zeitschwelle überschritten und ein Spannungswert, insbesondere eine Zwischenkreisspannung ($U_{zk}$) einen vorgegebenen Schwellenwert überschreitet.

6. Verfahren nach einem der Ansprüche 1 bis 3, **dadurch gekennzeichnet, dass** die elektrische Maschine (1) vom Freischalt-Modus (Z2) in den Kurzschluss-Modus (Z3) geschaltet wird, wenn eine vorgegebene Zeitschwelle überschritten und eine Drehzahl (n) einen vorgegebenen Schwellenwert überschreitet.

7. Verfahren nach Anspruch 6, **dadurch gekennzeichnet, dass** der Schwellenwert etwa 50% einer maximalen Drehzahl beträgt.

8. Vorrichtung zum Betreiben einer elektrischen Maschine (1) mit einem Pulswechselrichter (2) im Falle einer Störung, **dadurch gekennzeichnet, dass** ein Steuergerät (6) vorgesehen ist, das den Pulswechselrichter (2) im Falle einer Störung so ansteuert, dass dieser zunächst in einen Freischalt-Modus (Z2), in dem sämtliche Schalter (3a-3f) des Pulswechselrichters (2) geöffnet sind, und nachfolgend in einen Kurzschluss-Modus (Z3) schaltet, in dem die mit einem hohen Potential verbundenen Schalter (3a-3c) geöffnet und die mit einem niedrigen Potential ($U_0$) verbundenen Schalter (3d-3f) geschlossen sind.

## Claims

1. Method for operating an electrical machine (1) having a pulse-controlled inverter (2) in the event of a fault, **characterized in that**, in the event of a fault, the electrical machine (1) is first switched to a disconnect mode (Z2), in which all the switches (3a-3f) of the pulse-controlled inverter (2) are open, and then to a short-circuit mode (Z3), in which the switches (3a-3c) which are connected to a high potential are open and the switches (3d-3f) which are connected to a low potential ($U_0$) are closed.

2. Method according to Claim 1, **characterized in that** the electrical machine (1) is switched from the disconnect mode (Z2) to the short-circuit mode (Z3) if a prespecified time threshold is exceeded.

3. Method according to Claim 2, **characterized in that** the time threshold is selected in accordance with an equation:

$$t = L \cdot K \cdot l_{max} / [U_{zk} + R \cdot l_{max} \cdot K].$$

4. Method according to one of the preceding claims, **characterized in that** the electrical machine (1) is switched from the disconnect mode (Z2) to the short-circuit mode (Z3) if a prespecified time threshold is exceeded and a current value, in particular the battery current ($I_{Bat}$), exceeds a prespecified threshold value.

5. Method according to one of Claims 1 to 3, **characterized in that** the electrical machine (1) is switched from the disconnect mode (Z2) to the short-circuit mode (Z3) if a prespecified time threshold is exceeded and a voltage value, in particular an intermediate circuit voltage ($U_{zk}$), exceeds a prespecified threshold value.

6. Method according to one of Claims 1 to 3, **characterized in that** the electrical machine (1) is switched from the disconnect mode (Z2) to the short-circuit mode (Z3) if a prespecified time threshold is exceeded and a rotation speed (n) exceeds a prespecified threshold value.

7. Method according to Claim 6, **characterized in that** the threshold value is approximately 50% of a maximum rotation speed.

8. Apparatus for operating an electrical machine (1) having a pulse-controlled inverter (2) in the event of a fault, **characterized in that** a controller (6) is provided which, in the event of a fault, actuates the pulse-controlled inverter (2) such that it is first switched to a disconnect mode (Z2), in which all the switches (3a-3f) of the pulse-controlled inverter (2) are open, and then to a short-circuit mode (Z3), in which the switches (3a-3c) which are connected to a high potential are open and the switches (3d-3f) which are connected to a low potential ($U_0$) are closed.

## Revendications

1. Procédé pour conduire en cas de perturbation une machine électrique (1) qui présente un onduleur pulsé (2),
   **caractérisé en ce que**
   en cas de perturbation, la machine électrique (1) est d'abord commutée en un mode (Z2) de commutation libre dans lequel tous les commutateurs (3a-3f) de l'onduleur pulsé (2) sont ouverts et ensuite en un mode de court-circuit (Z3) dans lequel les commutateurs (3a-3c) raccordés à un potentiel élevé sont ouverts et les commutateurs (3d-3f) raccordés à un potentiel bas ($U_0$) sont fermés.

2. Procédé selon la revendication 1, **caractérisé en ce que** la machine (1) est commutée du mode de commutation libre (Z2) au mode de court-circuit (Z3) lorsqu'un seuil temporel prédéterminé est dépassé.

3. Procédé selon la revendication 2, **caractérisé en ce que** le seuil temporel est sélectionné selon une équation :

$$t = L . K . I_{max} / [U_{zk} + R . I_{max} . K]$$

4. Procédé selon l'une des revendications précédentes, **caractérisé en ce que** la machine électrique (1) est commutée du mode de commutation libre (Z2) au mode de court-circuit (Z3) lorsqu'un seuil temporel prédéterminé est dépassé et qu'une valeur de courant, en particulier du courant de batterie ($I_{Bat}$), dépasse une valeur de seuil prédéterminée.

5. Procédé selon l'une des revendications 1 à 3, **caractérisé en ce que** la machine électrique (1) est commutée du mode de commutation libre (Z2) au mode de court-circuit (Z3) lorsqu'un seuil temporel prédéterminé est dépassé et qu'une valeur de tension, en particulier d'une tension ($U_{zk}$) du circuit intermédiaire, dépasse une valeur de seuil prédéterminée.

6. Procédé selon l'une des revendications 1 à 3, **caractérisé en ce que** la machine électrique (1) est commutée du mode de commutation libre (Z2) au mode de court-circuit (Z3) lorsqu'un seuil temporel prédéterminé est dépassé et qu'une vitesse de rotation (n) dépasse une valeur de seuil prédéterminée.

7. Procédé selon la revendication 6, **caractérisé en ce que** la valeur de seuil représente environ 50 % d'une vitesse de rotation maximale.

8. Dispositif pour conduire en cas de perturbation une machine électrique (1) dotée d'un onduleur pulsé (2), **caractérisé en ce que**
il présente un appareil de commande (6) qui, en cas de perturbation, commande l'onduleur pulsé (2) de telle sorte que ce dernier commute d'abord dans un mode de commutation libre (Z2) dans lequel tous les commutateurs (3a-3f) de l'onduleur pulsé (2) sont ouverts et ensuite dans un mode de court-circuit (Z3) dans lequel les commutateurs (3a-3c) raccordés à un potentiel élevé sont ouverts et les commutateurs (3d-3f) raccordés à un potentiel bas ($U_0$) sont fermés.

Fig. 1

EP 1 980 015 B1

**Fig. 2**

**Fig. 3**